# EUROPEAN PATENT APPLICATION

(11) **EP 4 105 873 A1**
(43) Date of publication of application: **21.12.2022**
(21) Application number: 21752978.3
(22) Date of filing: 08.02.2021
(51) Int. Cl.: G06Q 50/04

(54) **TOTAL LOGGING SYSTEM**

(30) Priority: 13.02.2020 JP 2020022448; 18.02.2020 JP 2020025213
(71) Applicant: Airex Co., Ltd., Nagoya-shi Aichi 453-0015 (JP)
(72) Inventor: KAWASAKI, Koji, Nagoya-shi Aichi 453-0015 (JP); OGATA, Yoshitaka, Nagoya-shi Aichi 453-0015 (JP); KAKUDA, Daisuke, Nagoya-shi Aichi 453-0015 (JP); OKADA Yoshiaki, Nagoya-shi Aichi 453-0015 (JP)
(74) Representative: Lederer & Keller Patentanwälte Partnerschaft mbB
(86) International application number: PCT/JP2021/004576
(87) International publication number: WO 2021/161956

(57) **Abstract**

The present invention provides a total logging system capable of promptly and properly finding the cause of trouble and confirming countermeasures by comprehensively recording and accumulating an operator, a state of operations, and a work environment and tracing a series of operations together with recorded videos. The total logging system includes: an image capturing device for capturing images of the state of operations; an information exchanging device for communicating information between a tag and a reader; several types of sensors for monitoring the internal environment of the sterile working device and the operating state of an inward/outward conveying mechanism and other mechanisms; and an information recording and accumulating device. The information recording and accumulating device authenticates an operator according to the information received from the information exchanging device and records details of operations performed by the operator using the machines, appliances, treatment object articles and other items. Also, the information recording and accumulating device records information regarding any or no change in the internal environment of the sterile working device and the operating state of the inward/outward conveying mechanism and other mechanisms according to the information received from the sensors. The recorded information is provided with an index by corresponding to a video in chronological order to be recorded and accumulated.

## Description

### TECHNICAL FIELD

The present invention relates to a total logging system for recording and accumulating information including operator's data, a state of operations and a work environment, together with videos, for operations at sterile working devices such as isolators.

### BACKGROUND ART

Operations in clean atmosphere, e.g., at the stage of manufacturing pharmaceutical products or semiconductors and electronic components, are performed in clean work environment to maintain the internal space in a sterile and dust-free condition by protecting from contaminants in the external environment. Such a work environment used is generally a clean room. In the clean room, an operator dressed in a dust-free garment performs each operation. In operation, however, the clean room is configured to include a higher-level clean region to raise the sterility certified level and the dust-free property certified level.

One such approach of providing a high-level clean region is to employ an isolator. Such an isolator is a chamber sealed from the external environment that allows an operator to work through work gloves or in a half-suit from the outside of the chamber.

Another approach of providing a high-level clean region is to utilize a RABS (restricted access barrier system). In the RABS, a clean room is partially provided with a region surrounded by wall surfaces whose lower portions are opened to generate unidirectional clean air flow (laminar flow) from upward to downward inside the region, with operator's strict access restriction. The RABS allows an operator to work through work gloves provided on a wall surface.

Accordingly, pharmaceutical products are manufactured in severely sterile environment such as an isolator or RABS. Many of these operations essentially require an operator to directly or indirectly be involved therein. For example, sterile vial dispensing equipment or other equipment is used to dispense a pharmaceutical product to a container like a vial inside an isolator. The dispensing equipment is itself installed inside the isolator beforehand, and decontaminated prior to use as well as the isolator.

Nevertheless, an operator conveys into a sterile isolator such an equipment part as a filling needle and a chemical conveyance tube, a filling vial, a chemical to be filled with, and a rubber plug used after filling disposed at dispensing equipment. The operation for disposing a conveyed filling needle and other items at the dispensing equipment is also performed by the operator through work gloves from the outside of the isolator. Furthermore, during the filling operation as well, the operator monitors any fault in the filling inside the isolator. For example, in cases where any problem such as vial's falling or damage occurs, the operator fixes the problem through gloves.

Therefore, a series of these operations is recorded according to predetermined rules. For example, an operator and its detailed operation are identified and the data is recorded. In fact, the data management depends on the operator's self-reporting. Under the circumstances, such information may be varied, mistaken or insufficient according to operators. Thus, it is hard to identify the cause of such a trouble even by referring to previous records.

Meanwhile, the isolator's internal environment is constantly monitored by checking the temperature, humidity, pressure, airborne dust, airborne bacteria and other factors with sensors. The resulting data is also recorded in chronological order. Upon abnormality detection by each of the sensors, an operator solves the problem(s), and such troubleshooting data is recorded according to predetermined rules. However, it is hard to identify what has caused such an abnormality even by referring to previous records.

The internal pressure of an isolator is constantly maintained at positive pressure compared to the external environment to prevent contamination therefrom. For example, as described above, an operator's act of moving work gloves between in and out of the isolator in operation can cause an abnormality, i.e., changes in the internal pressure of the isolator, which fails to maintain the positive pressure temporarily. Unfortunately, it is extremely hard to find the cause of such a temporary abnormal pressure. The particularly important factor is the airtightness of work gloves. Specifically, if work gloves frequently used by operators are damaged with any hole (pin hole) or crack and the airtightness cannot be maintained, the internal high-level sterile environment is unsuccessfully kept in a proper condition.

Thus, it is preferable that the status of use including the frequency of use, the period of use of work gloves, and details of operations is correctly recorded and airtightness tests are conducted and such work gloves are replaced according to predetermined rules. In reality, work gloves have been managed by primarily inspecting any damage thereon after a certain period of time in use.

For example, work gloves after a certain period of time in use are replaced in sequence according to predetermined rules. However, it is difficult to precisely determine the actual status of use for an individual pair of work gloves before replacement. As a matter of fact, the work glove data management depends on the operator's self-reporting, visual inspections, or the like. Under the circumstances, such information may be varied, mistaken or insufficient according to operators, and different operations also cause various loads on an individual pair of work gloves.

Therefore, it is essential to identify an operator with an individual pair of work gloves and precisely determine the details and duration of operations. Such information allows the timing for conducting airtightness tests for an individual pair of work gloves and replacing the work gloves to be precisely determined. Moreover, it is possible to properly verify the occurrence of device and operation failures from the frequency of use of work gloves to promptly take safety measures.

Inventors of the present invention have proposed a glove logging system as described in the following patent document 1. The glove logging system records and accumulates the status of use including a user name, the frequency of use, the period of use, and details of operations for an individual pair of work gloves, which are mounted on a device like an isolator to precisely determine the timing for conducting airtightness tests and replace the work gloves and improve the safety of the work gloves and the working efficiency therewith.

### CITATION LIST

### PATENT LITERATURE

Patent Document 1: JP-A-2019-008565

### SUMMARY OF INVENTION

### TECHNICAL PROBLEM

The glove logging system of prior art can trace the glove operation upon occurrence of operational abnormality to confirm inappropriate operations, device failures and other defects retroactively. However, many other troubles have been found due to the above non-pressure abnormalities and other operators' inappropriate operations, device failures and other defects for other operations, which require a comprehensive system capable of solving these problems.

In particular, manufacturing of pharmaceutical products essentially requires components in terms of devices, skilled personnel and environment. Nevertheless, complete records must be kept when manufacturing pharmaceutical products, and if insufficiently recorded products are detected in the subsequent quality inspection, it is necessary to find the cause of the trouble and take prompt action. Unfortunately, conventional manufacturing recording operations for recording and accumulating operational data fail to take prompt action for cause analysis. Thus, incomplete information must essentially be accumulated such that the cause of failures can assuredly be identified. With additional human errors in the presence of an operator, it is hard to identify the name of an operator in trouble, details of his/her operation(s) and what time the failure happens.

Thus, the present invention was made in view of the situation to solve the problems, and has an object to provide a total logging system capable of promptly and properly finding the cause of trouble and confirming countermeasures by comprehensively recording and accumulating an authentication log of an operator, an operation log of a state of operations, an environment log of an operation environment, and an opening/closing and connection log of an inward/outward conveying mechanism and a connection mechanism in chronological order, together with videos, for a series of operations in a sterile working device such as an isolator and a RABS and tracing the series of operations together with recorded videos.

### SOLUTION TO PROBLEM

To solve the aforementioned problem, inventors of the present invention have carried out an extended investigation to find a combination of an operator log, an operation log, an environment log by an environment sensor and an opening/closing and connection log by a mechanism sensor derived from the information communicated through a RFID or a reader that is attached to an operator working at an isolator and a RABS and associated apparatuses with simultaneously captured videos. Based on that technique, the present invention was accomplished.

Specifically, a total logging system according to the present invention is, according to description in claim 1,
a logging system for recording and accumulating information regarding the state of a series of operations performed by an operator using a sterile working device, machines and appliances associated with the sterile working device, and appliances, reagents, treatment object articles and other items to be carried to the inside of the sterile working device, the system including:
an image capturing device for capturing images of the state of the operations; an information exchanging device for communicating information between a tag and a reader; several types of sensors for monitoring the state of the sterile working device; and an information recording and accumulating device for recording and accumulating information by communicating the information between the image capturing device, the information exchanging device and the sensors, characterized in that
the image capturing device includes a first camera for capturing images of the inside of the sterile working device,
the information exchanging device includes an operator's tag attached to one or more operators working outside or inside the sterile working device, an apparatus article's tag attached to the appliances, reagents, treatment object articles and other items to be carried to the inside of the sterile working device if needed, and an equipment's reader attached to the machines and appliances associated with the sterile working device and including an antenna for reading information from each of the tags,
the information recording and accumulating device records information for authenticating the operator as an authentication log according to the information received from the information exchanging device, records information for identifying the name of an individual operator and details of operations performed by the operator using the machines, appliances, reagents, the treatment object articles and other items as an operation log, and records information regarding any or no change in the internal environment of the sterile working device as an environment log according to the information received from the sensors, and
the information recording and accumulating device records and accumulates the information of the authentication log, the operation log, and the environment log by allowing each of the information to correspond to a camera video captured by the image capturing device in chronological order and providing a call-ready index for a predetermined part of the camera video.

Moreover, the present invention is, according to description in claim 2, the total logging system according to claim 1, characterized in that
the image capturing device includes, in addition to the first camera, a second camera for capturing images of the outer periphery of the sterile working device, and
the image capturing device records and accumulates the information of the authentication log, the operation log, and the environment log by also allowing each of the information to correspond to a camera video captured by the second camera in chronological order and providing a call-ready index for a predetermined part of the camera video.

Furthermore, the present invention is, according to description in claim 3, the total logging system according to claim 1 or 2, characterized in that
the sterile working device includes a high-level sterile region for maintaining a high-level sterility in the internal sterile region, and
the sensors include an area sensor for monitoring the high-level sterile region, and the area sensor detects an ingress of the operator or the machines, appliances, reagents, treatment object articles and other items into the high-level sterile region to transmit information to the information recording and accumulating device.

Moreover, the present invention is, according to description in claim 4, the total logging system according to any one of claims 1 to 3, characterized in that
the sensors include a particulate counter (PC) for continuously monitoring particulates in the high-level sterile region, a real-time microorganism monitor (RMM) for continuously monitoring microorganism particulates, and a pressure sensor (P) for monitoring the pressure in the sterile working device.

Moreover, the present invention is, according to description in claim 5, the total logging system according to claim 1, characterized in that
the information exchanging device includes a mechanism's reader attached to an inward/outward conveying mechanism such as a door and a pass box disposed in the sterile working device and a connection mechanism with an external device and including an antenna for reading information from each of the tags,
the sensors include several types of environment sensors for monitoring the internal environment of the sterile working device and a mechanism sensor for monitoring the operating state of the inward/outward conveying mechanism and the connection mechanism,
the information recording and accumulating device records information regarding any or no change in the internal environment of the sterile working device as an environment log according to the information received from the environment sensors, and records information for identifying an individual operator and details of the operation of opening/closing and connecting in the inward/outward conveying mechanism and the connection mechanism performed by the operator as an opening/closing and connection log according to the information received from the mechanism sensor, and
the information recording and accumulating device records and accumulates the information of the authentication log, the operation log, the opening/closing and connection log, and the environment log by allowing each of the information to correspond to a camera video captured by the image capturing device in chronological order and providing a call-ready index for a predetermined part of the camera video.

Moreover, the present invention is, according to description in claim 6, the total logging system according to claim 5, characterized in that
the image capturing device includes, in addition to the first camera, a second camera for capturing images of the outer periphery of the sterile working device, and
the image capturing device records and accumulates the information of the authentication log, the operation log, and the environment log by also allowing each of the information to correspond to a camera video captured by the second camera in chronological order and providing a call-ready index for a predetermined part of the camera video.

Furthermore, the present invention is, according to description in claim 7, the total logging system according to claim 5 or 6, characterized in that
the sterile working device is a RABS (restricted access barrier system),
the inward/outward conveying mechanism is an openable/closable door used by the operator to work inside the RABS or carry the appliances, reagents, treatment object articles and other items to the inside of the RABS, and
the door is provided with the mechanism's reader and the mechanism sensor.

Moreover, the present invention is, according to description in claim 8, the total logging system according to any one of claims 1 to 7, characterized in that
the operator's tag and the apparatus article's tag are a RFID such as a RF tag and an IC tag.

### ADVANTAGEOUS EFFECTS OF INVENTION

According to the configuration of the above claim 1, the total logging system according to the present invention includes: an image capturing device; an information exchanging device; several types of sensors; and an information recording and accumulating device to record and accumulate information regarding the state of a series of operations performed by an operator using a sterile working device, machines and appliances associated with the sterile working device, and appliances, reagents and treatment object articles and other items to be carried to the inside of the sterile working device.

The image capturing device includes a first camera for capturing images of the inside of the sterile working device, and captures images of the state of operations regarding the sterile working device. The information exchanging device includes an operator's tag attached to one or more operators working outside or inside the sterile working device, an apparatus article's tag attached to appliances, reagents, treatment object articles and other items to be carried to the inside of the sterile working device if needed, and an equipment's reader attached to machines and appliances and including an antenna for reading information from each of the tags to communicate information between the tag and the reader. The sensors monitor the state of the sterile working device.

The information recording and accumulating device communicates information between the image capturing device, the information exchanging device and the sensors to record and accumulate the information. Specifically, the information recording and accumulating device records information for authenticating the operator as an authentication log according to the information received from the information exchanging device, and records information for identifying the name of an individual operator and details of operations performed by the operator using the machines, appliances, reagents, treatment object articles and other items as an operation log. Also, the information recording and accumulating device records information regarding any or no change in the internal environment of the sterile working device as an environment log according to the information received from the sensors. Furthermore, the information recording and accumulating device records and accumulates the information of the authentication log, the operation log, and the environment log by allowing each of the information to correspond to a camera video captured by the image capturing device in chronological order and providing a call-ready index for a predetermined part of the camera video.

Accordingly, the information recording and accumulating device can comprehensively record and accumulate an authentication log of an operator, an operation log of a state of operations, an environment log of a work environment in chronological order, together with videos, for a series of operations in a sterile working device such as an isolator and a RABS. Also, using this advantage, the information recording and accumulating device can promptly and properly confirm the cause of trouble and countermeasures by tracing the series of operations together with recorded videos.

According to the configuration of the above claim 2, the image capturing device may include, in addition to the first camera, a second camera for capturing images of the outer periphery of the sterile working device. Also, the image capturing device records and accumulates the information of the authentication log, the operation log, and the environment log by also allowing each of the information to correspond to a camera video captured by the second camera in chronological order and providing a call-ready index for a predetermined part of the camera video. Accordingly, the above operational advantage can more efficiently be provided.

According to the configuration of the above claim 3, the sterile working device may include a high-level sterile region for maintaining a high-level sterility in the internal sterile region. In this case, several types of sensors include an area sensor for monitoring the high-level sterile region. The area sensor detects an ingress of the operator or the machines, appliances, reagents, treatment object articles and other items into the high-level sterile region to transmit information to the information recording and accumulating device. Accordingly, the above operational advantage can more efficiently be provided.

According to the configuration of the above claim 4, several types of sensors may include a particulate counter (PC) for continuously monitoring particulates in the high-level sterile region, a real-time microorganism monitor (RMM) for continuously monitoring microorganism particulates, and a pressure sensor (P) for monitoring the pressure in the sterile working device. Accordingly, the above operational advantage can more specifically be provided.

According to the configuration of the above claim 5, the information exchanging device includes a mechanism's reader, in addition to the operator's tag, the apparatus article's tag and the equipment's reader. The mechanism's reader is attached to an inward/outward conveying mechanism such as a door and a pass box disposed in the sterile working device and a connection mechanism with an external device and includes an antenna for reading information from each of the tags to communicate information between the tag and the reader. Several types of sensors include several types of environment sensors for monitoring the internal environment of the sterile working device and a mechanism sensor for monitoring the operating state of the inward/outward conveying mechanism and the connection mechanism.

The information recording and accumulating device records information regarding any or no change in the internal environment of the sterile working device as an environment log from the information received from the environment sensors. The information recording and accumulating device records information for identifying an individual operator and details of the operations of opening/closing and connecting in the inward/outward conveying mechanism and the connection mechanism performed by the operator as an opening/closing and connection log according to the information received from the mechanism sensor. Furthermore, the information recording and accumulating device records and accumulates the information of the authentication log, the operation log, opening/closing and connection log, and the environment log by allowing each of the information to correspond to a camera video captured by the image capturing device in chronological order and providing a call-ready index for a predetermined part of the camera video.

Accordingly, the total logging system can promptly and properly find the cause of trouble and confirm countermeasures by comprehensively recording and accumulating an authentication log of an operator, an operation log of a state of operations, an environment log of a work environment, and an opening/closing and connection log of an inward/outward conveying mechanism and a connection mechanism in chronological order, together with videos, for a series of operations in a sterile working device such as an isolator and a RABS and tracing the series of operations together with recorded videos.

According to the configuration of the above claim 6, the image capturing device may include, in addition to the first camera, a second camera for capturing images of the outer periphery of the sterile working device. Also, the image capturing device records and accumulates the information of the authentication log, the operation log, opening/closing and connection log, and the environment log by also allowing each of the information to correspond to a camera video captured by the second camera in chronological order and providing a call-ready index for a predetermined part of the camera video. Accordingly, the above operational advantage can more efficiently be provided.

According to the configuration of the above claim 7, the sterile working device is a RABS (restricted access barrier system), and the inward/outward conveying mechanism may include an openable/closable door used by an operator to work inside the RABS or carry the appliances, reagents, treatment object articles and other items to the inside of the RABS. The door is provided with the mechanism's reader and the mechanism sensor. Accordingly, the above operational advantage can more specifically be provided.

According to the configuration of the above claim 8, the operator's tag and the apparatus article's tag may be a RFID such as a RF tag and an IC tag. Accordingly, the above operational advantage can more specifically be provided.

### BRIEF DESCRIPTION OF DRAWINGS

FIG. 1 is a schematic configuration diagram illustrating a basic configuration of an isolator including a total logging system; and
FIG. 2 is an image diagram illustrating the external appearance of the isolator including the total logging system.

### DESCRIPTION OF EMBODIMENTS

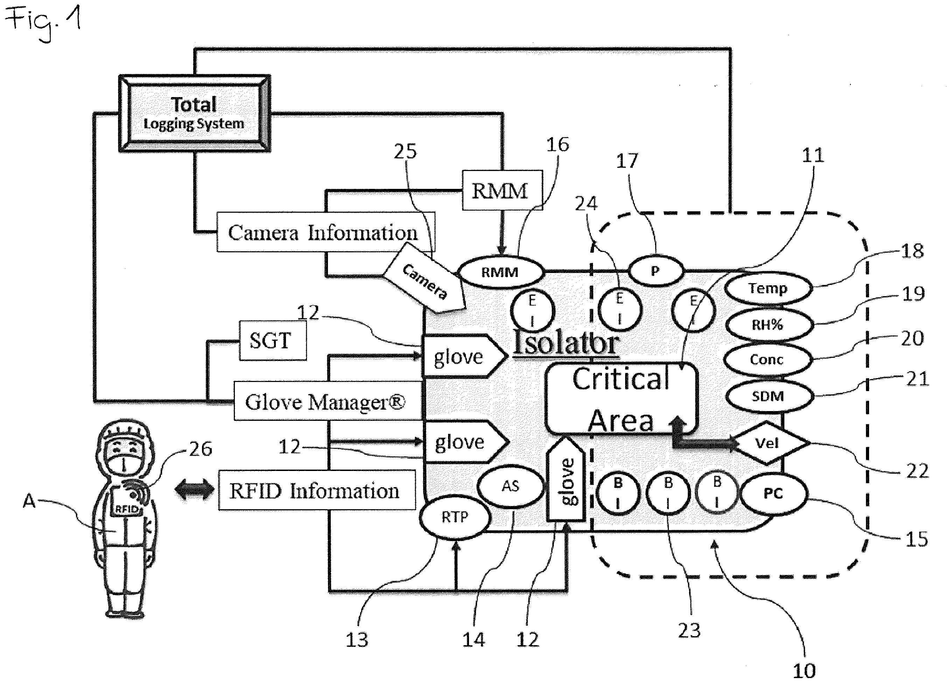

The total logging system according to the present invention will be described in detail. Herein, a total logging system included in an isolator is exemplified. However, the total logging system according to the present invention is applicable not only for an isolator, but also for a RABS (Restricted Access Barrier Systems). FIG. 1 is a schematic configuration diagram illustrating a basic configuration of an isolator including a total logging system.

In FIG. 1, an isolator 10 includes a high-level sterile region 11 (critical area 11), depending on the type of operation therein, where a higher-level sterility is maintained than other regions. In the critical area 11, essential operations for filling pharmaceutical products and culturing cells for regenerative medicine are performed. In addition, a wall portion of the isolator 10 is provided with a work glove 12 for an operator to perform operations from the outside. In fact, FIG. 1 illustrates 3 work gloves 12, but the number thereof is not particularly restricted.

A side wall of the isolator 10 is provided with a sterile connection port 13 (RTP13) for conveying an article from the external environment to the inside of the isolator 10. A pass box and others may be disposed in place of or in addition to the RTP13. An air sampler 14 (AS14) for monitoring airborne bacteria and airborne dust inside the isolator 10 and a particulate counter 15 (PC15) are provided as several types of sensors for monitoring the internal environment of the isolator 10. A microorganism speedy inspection apparatus 16 (RMM16) for monitoring the sterility inside the isolator 10 is also provided. The PC15 or RMM16 may be configured to focus on the monitoring of the critical area 11.

Additionally, the isolator 10 is provided with a pressure sensor 17 (P17), a temperature sensor 18 (Temp18), a humidity sensor 19 (RH%19), a gas concentration detector 20 (Conc20), a condensation sensor 21 (SDM21), and in particular, an anemometer 22 (Vel22) for measuring the wind velocity in the critical area 11. The isolator 10 also includes an enzyme indicator 23 (EI24) and a biological indicator 23 (BI23) for confirming decontamination effects inside the isolator 10. The gas concentration detector 20, the enzyme indicator 23 (EI24), and the biological indicator 23 (BI23) are used only for decontamination.

Subsequently, the configuration of the total logging system for recording and accumulating several types of operations in the isolator 10 including such a large number of equipment and sensors will be described. The total logging system according to the present invention is primarily composed of an image capturing device, an information exchanging device (a tag and a reader), several types of sensors, and an information recording and accumulating device. FIG. 1 illustrates only a first camera 25 for capturing images of the inside of the isolator 10, which serves as an image capturing device, but the isolator 10 may include a second camera for capturing images of the outer periphery of the isolator 10 (later-described). Preferably, the first camera 21 and the second camera are each a video camera or a digital camera capable of capturing videos. A plurality of first cameras or second cameras may be used such that they can capture images of the entire work area.

The information exchanging device communicates information between a tag and a reader to identify and record details of operations. Illustrative examples of such a tag include an operator's tag 26 attached to an operator A working outside or inside the isolator 10, or an apparatus article's tag attached to machines and appliances mounted inside or outside the isolator 10 and appliances, reagents and treatment articles (pharmaceutical products, cells, etc.) to be carried to the inside of the isolator 10. These types of tags are not particularly restricted, but may include a RFID (radio-frequency identification) including the data of the tag-bearing operator and the information for identifying the appliances, reagents and treatment articles. In FIG. 1, the operator A wears a RFID, which is an operator's tag 26, on the chest. Meanwhile, the apparatus article's tag (not shown in FIG. 1) is primarily attached to appliances, reagents, and treatment articles to be conveyed to the inside of isolator during an operation.

Meanwhile, the reader employed is an equipment's reader provided with an antenna for reading information from each of the tangs, which is attached to machines and appliances. In FIG. 1, equipment's readers (not shown) are each attached to the critical area 11, the work glove 12, the sterile connection port 13 (RTP13), the air sampler 14 (AS14), the particulate counter 15 (PC15), and the microorganism speedy inspection apparatus 16 (RMM16). These readers have a limited receiving area for exchanging information with the tag to sense the presence of an operator or appliances, reagents and treatment articles to be conveyed when they approach an area for handling the equipment (receiving area).

Several types of sensors are the above-described sensors 14 to 22, each transmitting the information sensed thereby to a later-described information recording and accumulating device and recording the same. Detection of abnormal values sequentially operates an alarm device or a stopping device. In FIG. 1, the isolator 10 includes the critical area 11 therein. In this case, the isolator 10 is provided with an area sensor for monitoring the critical area 11 to detect an ingress of an operator, articles, or treatment articles into this area.

The information recording and accumulating device first authenticates an operator who will work at the isolator 10. This authentication is conducted by identifying the operator with the information communicated with the operator's tag 26 (RFID) worn by the operator, and with the operator's input ID, password and other data. The information is recorded as an authentication log. Subsequently, the information for identifying the identified individual operator and details of operations performed by the operator using the machines, appliances, treatment object articles and other items is received from each reader of the information exchanging device, and the information for identifying the operator and details of the operations is recorded as an operation log. The information recording and accumulating device records information regarding any or no change in the internal environment of the isolator 10 as an environment log according to the information received from the sensors.

A personal computer (not shown in FIG. 1) may be used as an information recording and accumulating device. In this case, the personal computer communicates information with each reader by wireless LAN to receive information from each RFID read by each reader and information from the sensors. With a reader having reading/writing functions, a personal computer writes information in each RFID through each reader. The personal computer records and accumulates identified operator's data (authentication log), the duration of operations, details of operations (operation log) and environment information (environment log) for each operation according to these types of information.

Subsequently, the information recording and accumulating device records and accumulates the information of the authentication log, the operation log, and the environment log for a series of operations by allowing each of the information to correspond to a camera video (continuous video) captured by the first camera 25 and if needed the second camera (27 as later described) in chronological order and providing a call-ready index for a predetermined part of the camera video (start and end of an operation, in particular).

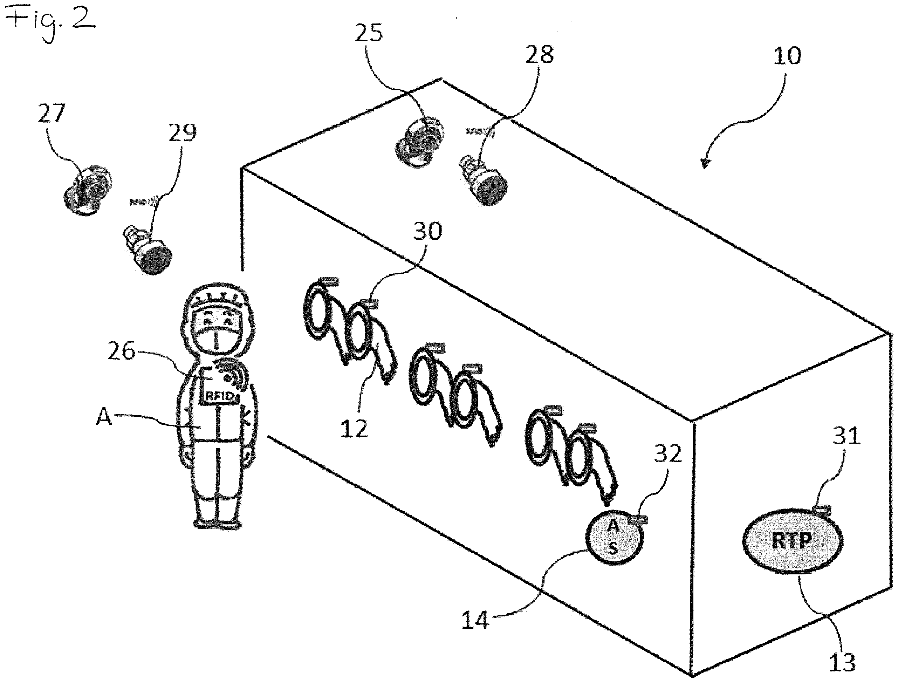

FIG. 2 is an image diagram illustrating the external appearance of the isolator including the total logging system. In FIG. 2, the isolator 10 is placed on the floor of a clean room (not shown). The inside of the isolator 10 corresponds to a chamber with the sterile state maintained. The inside of the chamber is not illustrated. The image diagram of FIG. 2 illustrates no filter unit for air supply and exhaust included in the isolator 10, no blower for air exhaust to the outside by filtration through the filter unit, or no transparent glass window capable of visually confirming the inside.

In FIG. 2, a side wall of the isolator 10 is provided with a work glove 12. In FIG. 2, a total of 6 (3 pairs of) gloves 12 are attached to the isolator. A wall surface of the isolator 10 is provided with the sterile connection port 13 (RTP13). Another wall surface is provided with the air sampler 14. FIG. 2 illustrates no other equipment.

Next to the isolator 10 and the work gloves 12 stands an operator A working with the work gloves 12. The operator's tag 26 (RFID) is attached on the chest of the operator A.

In FIG. 2, the isolator 10 is provided with the first camera 25 for capturing images of the inside of the isolator 10, which serves as an image capturing device for capturing images of the operating condition, and a second camera 27 for capturing images of the outer periphery of the isolator 10. In addition, a reader 28 for detecting a tag (RFID) inside the isolator 10 is provided near the first camera 25. Furthermore, a reader 29 for detecting a tag (RFID) outside the isolator 10 is provided near the second camera 27.

The work gloves 12 provided on the side wall of the isolator 10 each include a reader 30. The sterile connection port 13 and the air sampler 14 are provided with readers 31, 32, respectively. These readers 30, 31, 32 detect an ingress of the operator A's RFID into each receiving area and record the operation by the operator A at the device.

The total logging system according to the present invention will be described with reference to each of the embodiments. The present invention is not restricted to each of the following embodiments only. In each of the following embodiments, reference numerals are not given because descriptions are not aided by the drawings.

### <First embodiment>

This first embodiment describes an operation using sterile vial dispensing equipment installed inside an isolator including a chamber in a Grade A sterile state. Specifically, a vial is conveyed into a sterile environment, continuously and sterilely filled with a chemical, and then put with a rubber plug in sterile environment and wound with an aluminum cap. A basic configuration of the total logging system is described as above.

First, an operator A in a clean room is provided with a RFID attached on the chest of a dust-free garment. Subsequently, the operator A allows a reader included in an authentication apparatus to read RFID information and inputs its own ID and password to a personal computer. At this time, the personal computer communicating information with the reader identifies the operator A by referring to the inputted ID and password and the accumulated previous information. Instead of referring to the operator A and the RFID, the operator may input the user information of the operator A to the RFID at this stage, using a reader having both reading/writing functions. The operator may also be authenticated using biometric authentication, QR codes (registered trademark), bar codes and so on.

Subsequently, the operator A will perform a preliminary work for filling a sterile vial with a chemical at the isolator. First, to mount a sterilized filling needle and a chemical delivery tube to a sterile vial filling apparatus through a RTP (Rapid Transfer Port) included in the isolator, a preparatory work for sterilely conveying the sterilized filling needle and the chemical delivery tube into the isolator is performed. First, a container containing the sterilized filling needle and the chemical delivery tube is connected to the RTP. An ingress of the operator A's RFID into a receiving area covered by an antenna included in a reader installed near the RTP and a RTP operation performed by the operator A are read and recorded.

The resulting recording triggers the providing of information including the duration of operations, operator's information, and details of operations as a call-ready index for continuous image data by a video camera W installed outside the isolator. The operation completion time is recorded at the time when an operation is completed and the operator A leaves the RTP and gets out of a receiving area covered by an antenna included in a reader installed near the RTP.

Subsequently, the operator A opens a lid inside the isolator of the RTP using work gloves attached adjacently to the RTP to convey the above sterilized filling needle and chemical delivery tube into the isolator. An ingress of the operator A's RFID into a receiving area covered by an antenna included in a reader installed near the gloves and a work glove operation performed by the operator A are read and recorded.

An ingress of operator A's arms into the work gloves detected by a sensor installed on each of the work gloves triggers the providing of information including the duration of operations, operator's information, and details of operations as a call-ready index for continuous image data by a video camera W installed outside the isolator and a video camera X installed inside the isolator. The operation completion time is similarly recorded at the time when an operation is completed and the operator A pulls the hands out of the work gloves and gets out of a receiving area covered by an antenna included in a reader installed near the work gloves.

Subsequently, the operator A attaches the sterilized filling needle and the chemical delivery tube conveyed into the isolator to a filling portion of the sterile vial filling apparatus. When the operator A approaches the work gloves near the filling portion to attach the filling needle to the filling portion, an ingress of the operator A's RFID into a receiving area covered by an antenna included in a reader installed near the work gloves and a glove operation performed by the operator A are read and recorded. An ingress of operator A's arms into the work gloves detected by a sensor installed on the work gloves triggers the providing of information including the duration of operations, operator's information, and details of operations as a call-ready index for continuous image data by a video camera W installed outside the isolator and a video camera X installed inside the isolator.

Subsequently, the operator A attaches the filling needle to the filling portion through the work gloves. At this time, an operation is performed in a high-level sterile region (critical area) for performing a highly critical work when the operator sterilely fills a vial like a filling portion with a chemical in the isolator. The critical area is provided with an area sensor for sensing a motion, which reacts with the operator A' glove operation, and the resulting signal triggers the providing of information including the duration of operations, operator's information, and details of operations in the critical area as a call-ready index for image data by a video camera W installed outside the isolator and a video camera X installed inside the isolator. The operation completion time is similarly recorded at the time when the RFID of the operator A gets out of a receiving area covered by an antenna included in a reader installed near the work gloves.

Subsequently, the operator A conveys a rubber plug of a sterilized vial into the isolator. First, a container containing the rubber plug of a sterilized vial is connected to the RTP. The operator A's RFID detects and records an ingress of the operator A into a receiving area covered by an antenna included in a reader installed near the RTP and the operator A's RTP operation. The resulting recording triggers the providing of information including the duration of operations, operator's information, and details of operations as a call-ready index for image data by a video camera W installed outside the isolator. The operation completion time is similarly recorded at the time when the RFID of the operator A gets out of a receiving area covered by an antenna included in a reader installed near the RTP.

Subsequently, the operator A opens a lid of a RTP port using work gloves attached adjacently to the RTP to convey the above sterilized vial rubber plug into the isolator. An ingress of the operator A's RFID into a receiving area covered by an antenna included in a reader installed near the work gloves and a glove operation performed by the operator A are read and recorded. An ingress of operator A's arms into the work gloves by a sensor installed on each of the work gloves triggers the providing of information including the duration of operations, operator information, and details of operations as a call-ready index for image data by a video camera W installed outside the isolator and a video camera X installed inside the isolator. The operation completion time is similarly recorded at the time when the RFID of the operator A gets out of a receiving area covered by an antenna included in a reader installed near the work gloves.

Now that the preliminary work for filling a sterile vial with a chemical is completed, the operator A subsequently activates the sterile vial filling apparatus installed in the isolator and starts the operation of continuously filling the vial with a chemical. During these operations, details of operations are recorded in an extra recording device included in the sterile vial filling apparatus.

Subsequently, the operation of the total logging system during the sterile vial filling operation will be described. The isolator is provided with various sensors for monitoring the state of the isolator, and whether there is any abnormality in the internal sterile environment is constantly monitored. Illustrative examples of the environment monitor include a pressure sensor (P), a wind velocity sensor (Vel), a temperature sensor (Temp), and a humidity sensor (RH%). In addition, a particulate counter (PC) and a real-time microorganism monitor (RMM) for continuously monitoring microorganism particulates in the environmental air may be disposed in a high-level sterile region (critical area) for performing a highly critical work when the operator sterilely fills a vial like a filling portion with a chemical in the isolator. Examples of these sensors in use as trigger factors will be described.

When there is any abnormality with a filling apparatus during the operation of filling a sterile vial (e.g., vial's falling or damage in a vial conveyance line), abnormal signals are emitted from the filling apparatus, and the operator may need to solve the problem by stopping the filling apparatus. If vial's falling occurs in the vial conveyance line to allow a sensor of the filling apparatus to emit abnormal signals to stop the filling apparatus, the operator A may need to remove such a falling vial bottle. The operator A approaches the work gloves near the vial conveyance line where vial's falling has occurred to remove with the work gloves falling vial bottle(s) in the line.

An ingress of the operator A's RFID into a receiving area of a loop antenna included in a reader installed near the work gloves and a glove operation performed by the operator A are read and recorded. An ingress of operator A's arms into the work gloves by a sensor installed on each of the work gloves triggers the providing of information including the duration of operations, operator's information, and details of operations as a call-ready index for continuous image data by a video camera W installed outside the isolator and a video camera X installed inside the isolator. The operation completion time is similarly recorded at the time when the RFID of the operator A gets out of a receiving area covered by an antenna included in a reader installed near the work gloves.

Furthermore, when a gloves operation is performed during such a filling operation, the pressure in the isolator can vary as the operator puts the arms in or out of the work gloves. Large pressure variations can affect the sterile environment of the isolator, which causes the providing of information including abnormality outbreak time, operator's information, and details of operations as a call-ready index for continuous image data by a video camera W installed outside the isolator and a video camera X installed inside the isolator as in cases where there is any abnormality with a signal emitted from the pressure sensor provided in the above isolator. Such an abnormality triggers the providing of information including the duration of operations, operator's information and abnormality information as a call-ready index for continuous image data by a video camera X installed inside the isolator.

While microorganism particulates can be detected on the above RMM monitor during the operation of filling a sterile vial, an abnormal signal on the monitor triggers the providing of information including the abnormality outbreak time, operator's information, and details of abnormality as a call-ready index for continuous image data by a video camera W installed outside the isolator and a video camera X installed inside the isolator. At the same time, another function of the filling apparatus is to automatically remove a substantially appropriate number of vials with abnormal signals emitting from the RMM monitor. At the stage where the RMM monitor is back to a normal level, the information upon the operation completion is provided as a call-ready index for continuous image data.

After the above sterile vial filling operation is completed, whether the operation(s) has/have any defect or not is confirmed by referring to a manufacturing record report. During this confirmation operation, images provided with the index information and captured within time ranges required for confirming the abnormality outbreak time, and times before and after the operation completion time are instantly retrieved from continuous images provided with an index during each operation according to index information, and confirmed with actual images and referred to the manufacturing record. Furthermore, the above retrieved index information and image data are electrically stored together with the above manufacturing record report using falsification-proof software. Accordingly, data integrity (DI) of manufacturing recorded information can assuredly be guaranteed.

### <Second embodiment>

This second embodiment describes how to culture cells for regenerative medicine. First, an isolator includes a chamber and a pass box in Grade A sterile state placed on the floor of a clean room. The clean room includes an incubator (culture apparatus) that can be coupled to the isolator for culturing cells. The isolator also includes a centrifugal separator for separating cells collected from a culture dish. The isolator includes, in addition to work gloves, equipment, called "half suit," for an operator to get inside the isolator to perform a much more complex culture operation. Furthermore, a pass box is used in place of an RTP. A basic configuration of the total logging system is described as above.

In this second embodiment, first, operators B and C in a clean room are provided with a RFID attached on the chest of a dust-free garment. Subsequently, the operators B and C allow a reader to read RFID information and input their own IDs and passwords to a personal computer. At this time, the personal computer communicating information with the reader identifies the operators B and C by referring to the inputted ID and password and the accumulated previous information. Instead of referring to the operators B and C and the RFID, the operators may input the user information of the operators B and C to the RFID at this stage, using a reader having both reading/writing functions. The operators may also be authenticated using biometric authentication, QR codes (registered trademark), bar codes and so on.

Subsequently, the operator B will perform a preliminary work for culturing cells for regenerative medicine at the isolator. First, a preliminary work for conveying items including containers, appliances, culture media, buffers, and reagents required for culturing cells into the isolator is performed through a pass box included in the isolator. First, the operator B decontaminates with hydrogen peroxide the exterior of containers and appliances sterilized in a bag for sterilization, or the exterior of containers containing culture media, buffers, and reagents sterilized by filters beforehand, and then conveys them into the isolator.

When the operator B approaches the pass box for an operation, the subsequent ingress of the operator B's RFID into a receiving area covered by an antenna included in a reader installed near the pass box and a pass box operation performed by the operator B are read and recorded. The resulting recording triggers the providing of information including the duration of operations, operator's information, and details of operations as a call-ready index for continuous image data by a video camera Y installed outside the isolator. The operation completion time is recorded at the time when an operation is completed and the operator B leaves the pass box after closing a door of the pass box and gets out of a receiving area covered by an antenna included in a reader installed near the door of the pass box.

Thereafter, the operator B decontaminates and sterilizes with hydrogen peroxide the exterior of the above items to be conveyed using a decontaminating apparatus included in the pass box. The decontamination operation is recorded in extra recording apparatuses included in the isolator and the pass box.

Subsequently, the operator B opens a door on the side of the isolator of the pass box using work gloves attached adjacently to the pass box to convey the above decontaminated items into the isolator. An ingress of the operator B's RFID into a receiving area covered by an antenna included in a reader installed near the work gloves and a work glove operation performed by the operator B are read and recorded. Furthermore, an ingress of operator B's arms into the work gloves detected by a sensor installed on each of the work gloves triggers the providing of information including the duration of operations, operator's information, and details of operations as a call-ready index for continuous image data by a video camera Y installed outside the isolator and a video camera Z installed inside the isolator. The operation completion time is similarly recorded at the time when an operation is completed and the operator C pulls the hands out of the work gloves and gets out of a receiving area covered by an antenna included in a reader installed near the work gloves.

Subsequently, the operator B conveys a culture dish containing cells cultured in the incubator into the isolator. The operator B mechanically couples the incubator to the isolator at their connecting portion and seals them to convey the culture dish in the incubator into the isolator. When the operator B approaches the above connecting portion, the subsequent ingress of the operator B into a receiving area covered by an antenna included in a reader installed near the connecting portion and a connecting operation performed by the operator B are read and recorded. The connecting operation detected by a sensor installed on the connecting portion triggers the providing of information including the duration of operations, operator's information, and details of operations as a call-ready index for continuous image data provided by a video camera Y installed outside the isolator. The operation completion time is similarly recorded at the time when an operation is completed and the operator B's RFID gets out of a receiving area covered by an antenna included in a reader installed near the connecting portion.

Subsequently, the operator B decontaminates with hydrogen peroxide a connecting portion of the isolator and the incubator using equipment included in the isolator. The decontamination operation is recorded in a recorder included in the isolator.

After the connecting portion is completely decontaminated, a door of the connecting portion in the isolator with the incubator is opened to convey a culture dish into the isolator. The operator C performs an operation using a half suit provided in the isolator.

When the operator C approaches an entrance of a half suit to wear the half suit, the subsequent ingress of the operator C into a receiving area covered by an antenna included in a reader installed near the entrance and a half suit operation performed by the operator C are read and recorded. Subsequently, the operator C in the half suit opens the door of the connecting portion of the isolator and the incubator using the half suit. The signal of a sensor provided on the door triggers the further providing of information including the duration of operations, operator's information, and details of operations by the half suit as a call-ready index for continuous image data by a video camera Z installed inside the isolator. Subsequently, the operator C conveys a culture dish containing cultured cells from the incubator into the isolator using the half suit. The operation completion time is similarly recorded at the time when a signal indicative of door's closing is confirmed by a sensor provided on the door of the connecting portion of the isolator and the incubator.

Subsequently, the operation of the isolator and the total logging system in the operation of culturing cells for regenerative medicine will be described. In cell culture for regenerative medicine, culture media, buffers, and reagents are added with a pipette to a culture dish, cells are separated and collected from the culture dish, its cell dispersion is moved to a centrifugal bottle to separate cells by centrifugal operation, and then a complex operation, called "sub-culturing" passages for seeding the culture dish added with new culture media, is performed. A high-level sterile region, in which a highly critical operation like the sub-culturing is performed, is regarded as a critical area. The critical area is provided with an area sensor for detecting the cell motion.

Moreover, the critical area is provided with a reader for recording RFIDs provided on appliances including a culture dish containing cultured cells, an empty culture dish, a centrifugal bottle, culture media, buffers, reagents, and a pipette used in the above sub-culturing passages. The operator C in the half suit puts in the above critical area items for a culturing operation including a culture dish containing cultured cells, an empty culture dish, a centrifugal bottle, culture media, buffers, reagents, and a pipette. An ingress of such items into a receiving area covered by an antenna included in a reader provided in the critical area allows RFIDs of the above items for a culturing operation to be read and recorded.

Furthermore, sub-culturing passages are performed in the critical area using the half suit. A signal derived from the motion of the work glove portion of the half suit detected by an area sensor provided in the critical area triggers the providing of information including the duration of operations, operator's information, and details of operations in the critical area as a call-ready index for continuous image data by a video camera Z installed inside the isolator. The operation completion time is similarly recorded at the time when no more signal is detected from the area sensor of the critical area.

The isolator is provided with various sensors for monitoring the state of the isolator, and whether there is any abnormality in the internal sterile environment is constantly monitored. Illustrative examples of the environment monitor include a pressure sensor (P), a wind velocity sensor (Vel), a temperature sensor (Temp), and a humidity sensor (RH%). A particulate counter (PC) and a real-time microorganism monitor (RMM) for continuously monitoring microorganism particulates in the environmental air may be disposed in a high-level sterile region (critical area) for performing a highly critical work when the operator sterilely operates a cell dispersion and others as in sub-culturing passages in cell culturing for regenerative medicine. The operation of the total logging system using these sensors serving as a trigger will be exemplified.

While microorganism particulates can be detected on the RMM monitor during sub-culturing passages, an abnormal signal on the monitor triggers the providing of information including the abnormality outbreak time, operator's information, and details of abnormality as a call-ready index for continuous image data by a video camera Z installed inside the isolator. Furthermore, an abnormal signal emitted by the sensors provided on the isolator during sub-culturing passages also triggers the providing of information including the abnormality outbreak time, operator's information, and details of abnormality as a call-ready index for continuous image data by a video camera Z installed inside the isolator. Upon abnormality occurrence, the operator C properly removes items for culture operation including a culture dish containing cultured cells, an empty culture dish, a centrifugal bottle, culture media, buffers, reagents and a pipette from the critical area, and causes the providing of information including the abnormality outbreak time, operator's information, and details of operations as a call-ready index for continuous image data as well.

Upon completion of a series of sub-culturing passages, the operator conveys a culture dish containing new seeded cells into the incubator. The operator C opens a door of the connecting portion of the isolator and the incubator using the half suit. A signal of the sensor provided on the door triggers the further providing of information including the duration of operations, operator's information and details of operations using the half suit as a call-ready index for continuous image data by a video camera Z installed inside the isolator. Subsequently, the operator C conveys a culture dish containing seeded cells from the isolator into the incubator using the half suit. The operation completion time is similarly recorded at the time when a signal indicative of door's closing is confirmed by a sensor provided on the door of the connecting portion of the isolator and the incubator.

Subsequently, the operator B separates the incubator from the isolator, returns the incubator to the original position and starts cell culturing. When the operator B approaches the connecting portion, the subsequent ingress of the operator B into a receiving area covered by an antenna included in a reader installed near the connecting portion and a separating operation performed by the operator B are read and recorded. The separating operation detected by a sensor installed on the connecting portion triggers the providing of information including the duration of operations, operator's information, and details of operations as a call-ready index for continuous image data provided by a video camera Y installed outside the isolator.

After the above cell culturing operation for regenerative medicine is completed, whether the operation(s) has/have any defect or not is confirmed by referring to a manufacturing record report. During a confirmation operation, images provided with the index information and captured within time ranges required for confirming the abnormality outbreak time, and times before and after the operation completion time are instantly retrieved from continuous images provided with an index during each operation according to index information, and confirmed with actual images and referred to the manufacturing record. Furthermore, the retrieved index information and image data are electrically stored together with the above manufacturing record report using falsification-proof software. Accordingly, data integrity (DI) of manufacturing recorded information can assuredly be guaranteed.

### <Third embodiment>

This third embodiment describes a RABS operation by an operator D using a total logging system. First, the RABS is configured to maintain a manufacturing device in a sterile condition, surround with hard walls the entire device provided therein and produce unidirectional air flows of Grade A so long as personnel intervention is strictly restricted, and is placed on the floor of a clean room. In this third embodiment, the RABS is provided with sterile vial dispensing equipment for conveying a vial into a sterile environment, continuously and sterilely filling the vial with a chemical, and then putting the vial with a rubber plug in sterile environment and winding it with an aluminum cap. A basic configuration of the total logging system is described as above.

First, an operator D in a clean room is provided with a RFID attached on the chest of a dust-free garment. Subsequently, the operator D allows a reader to read RFID information and inputs its own ID and password to a personal computer. At this time, the personal computer communicating information with the reader identifies the operator D by referring to the inputted ID and password and the accumulated previous information. Instead of referring to the operator D and the RFID, the operator may input the user information of the operator D to the RFID at this stage, using a reader having both reading/writing functions.

Subsequently, the operator D will perform a preliminary work for filling a sterile vial with a chemical at the RABS. First, to mount a sterilized filling needle and a chemical delivery tube to a sterile vial filling apparatus through an openable/closeable door included in the RABS, a preparatory work for sterilely conveying the sterilized filling needle and the chemical delivery tube into the RABS is performed. First, a container containing the sterilized filling needle and the chemical delivery tube is conveyed from the openable/closeable door provided in the RABS. The operator D's RFID detects and records an ingress of the operator D into a receiving area covered by an antenna included in a reader installed near the door of the RABS and the operator D's door operation.

Furthermore, the door-opening sensing operation by a sensor for sensing the opening/closing of a door triggers the adding of information including the duration of operations, operator's information, and details of operations as a call-ready index to continuous image data provided by a video camera E installed outside the RABS and a video camera F installed inside the RABS. The operation completion time is similarly recorded at the time when an operation is completed, the operator D gets outside to close the door and a sensor for sensing the door's opening/closing senses the door's closing.

Subsequently, the operator D opens the door using work gloves attached adjacently to the filling device to move the above sterilized filling needle and chemical delivery tube to the neighborhood of a filling portion in the RABS. An ingress of the operator D's RFID into a receiving area covered by an antenna included in a reader installed near the work gloves and a work glove operation performed by the operator D are read and recorded. An ingress of operator D's arms into the work gloves by a sensor installed on each of the work gloves triggers the adding of information including the duration of operations, operator's information, and details of operations as a call-ready index to continuous image data by a video camera E installed outside the RABS and a video camera F installed inside the RABS. The operation completion time is similarly recorded at the time when an operation is completed and the operator D pulls the hands out of the work gloves and gets out of a receiving area covered by an antenna included in a reader installed near the work gloves.

Subsequently, the operator D attaches the sterilized filling needle and the chemical delivery tube conveyed into the RABS to a filling portion of the sterile vial filling apparatus. When the operator D approaches the work gloves near the filling portion to attach the filling needle to the filling portion, the subsequent ingress of the operator D into a receiving area covered by an antenna included in a reader installed near the work gloves and a glove operation performed by the operator D are read and recorded. An ingress of operator D's arms into the work gloves by a sensor installed on each of the work gloves triggers the adding of information including the duration of operations, operator's information, and details of operations as a call-ready index to continuous image data by a video camera E installed outside the RABS and a video camera F installed inside the RABS.

Subsequently, the operator D attaches the filling needle to the filling portion through the work gloves. At this time, an operation is performed in a high-level sterile region (critical area) for performing a highly critical work when the operator sterilely fills a vial like a filling portion with a chemical in the RABS. The critical area is provided with an area sensor for sensing a motion, which reacts with the operator D' glove operation, and the resulting signal triggers the further adding of information including the duration of operations, operator's information, and details of operations in the critical area as a call-ready index to continuous image data by a video camera E installed outside the RABS and a video camera F installed inside the RABS. The operation completion time is similarly recorded at the time when the RFID of the operator D gets out of a receiving area covered by an antenna included in a reader installed near the work gloves.

Subsequently, the operator D conveys a rubber plug of a sterilized vial into the RABS. First, the operator D opens a door of the RABS to convey a container containing the rubber plug of a sterilized vial into the RABS. The operator D's RFID detects and records an ingress of the operator D into a receiving area covered by an antenna included in a reader installed near the door of the RABS and the operator D's door operation. Further, the door-opening sensing operation by a sensor for sensing the opening/closing of a door triggers the adding of information including the duration of operations, operator's information, and details of operations as a call-ready index to continuous image data provided by a video camera E installed outside the RABS and a video camera F installed inside the RABS. The operation completion time is similarly recorded at the time when the operator D gets outside to close the door and a sensor for sensing the door's opening/closing senses the door's closing.

Subsequently, the operator D opens a lid of a hopper of a feeding device using work gloves attached adjacently to the rubber plug feeding device of a vial to inject the above rubber plug of a sterilized vial into the hopper. An ingress of the operator D's RFID into a receiving area covered by an antenna included in a reader installed near the work gloves and a work glove operation performed by the operator D are read and recorded. An ingress of operator D's arms into the work gloves by a sensor installed on each of the work gloves triggers the adding of information including the duration of operations, operator's information, and details of operations as a call-ready index to continuous image data by a video camera E installed outside the RABS and a video camera F installed inside the RABS. The operation completion time is similarly recorded at the time when the RFID of the operator D gets out of a receiving area covered by an antenna included in a reader installed near the work gloves.

Now that the preliminary work for filling a sterile vial with a chemical is completed, the operator D subsequently activates the sterile vial filling apparatus installed in the RABS and starts the operation of continuously filling the vial with a chemical. During these operations, details of operations are recorded in an extra recording device included in the sterile vial filling apparatus.

Subsequently, the operation of the total logging system during the sterile vial filling operation will be described. The RABS is provided with various sensors for monitoring the state of the RABS, and whether there is any abnormality in the internal sterile environment is monitored. Illustrative examples of the environment monitor include a particulate counter (PC) for continuously monitoring microorganism particulates in the environmental air, a wind velocity sensor (Vel), a temperature sensor (Temp), and a humidity sensor (RH%). Also, a real-time microorganism monitor (RMM) for continuously monitoring microorganism particulates in the environmental air may be disposed in a high-level sterile region (critical area) for performing a highly critical work when the operator sterilely fills a vial with a chemical even in the RABS, as in a filling portion. The operation of the total logging system using these sensors serving as a trigger will be exemplified.

When there is any abnormality with a filling apparatus (e.g., falling or damage of a vial in a vial conveyance line) during the operation of filling a sterile vial, abnormal signals are emitted from the filling apparatus, and the operator may need to solve the problem by stopping the filling apparatus. If vial's falling occurs in the vial conveyance line to allow a sensor of the filling apparatus to emit abnormal signals to stop the filling apparatus, the operator D may need to remove such a falling vial bottle. An ingress of the operator D's RFID into a receiving area of a loop antenna included in a reader installed near the work gloves and a glove operation performed by the operator D are read and recorded at the time when the operator D approaches the work gloves to remove falling bottles using the work gloves near the vial conveyance line where bottle falling has occurred.

An ingress of operator D's arms into the work gloves by a sensor installed on each of the work gloves triggers the adding of information including the duration of operations, operator's information, and details of operations as a call-ready index to continuous image data by a video camera E installed outside the RABS and a video camera F installed inside the RABS. The operation completion time is similarly recorded at the time when the RFID of the operator D gets out of a receiving area covered by an antenna included in a reader installed near the work gloves.

It is contemplated that when an abnormality occurs in a RABS, there are no work gloves near the RABS. At this time, an operator temporarily needs to open a door provided at the RABS to get inside and restore the operation. If vial's falling occurs in the vial conveyance line as described above to allow a sensor of a filling apparatus to emit abnormal signals to stop the filling apparatus and there are no work gloves near falling bottles, the operator D needs to open the door provided at the RABS to get inside and remove such a falling vial bottle. An ingress of the operator D's RFID into a receiving area covered by an antenna included in a reader installed near the door of the RABS and a door operation performed by the operator D are read and recorded.

Furthermore, the door-opening sensing operation by a sensor for sensing the opening/closing of a door triggers the adding of information including the duration of operations, operator's information, and details of operations as a call-ready index to continuous image data provided by a video camera E installed outside the RABS and a video camera F installed inside the RABS. The operation completion time for the operator D in the area to remove falling bottles is similarly recorded at the time when the operator D gets outside and a sensor for sensing the door's opening/closing provided at the door senses the door's closing.

While microorganism particulates can be detected on the above RMM monitor during the operation of filling a sterile vial, an abnormal signal on the monitor triggers the adding of information including the abnormality outbreak time, operator's information, and details of abnormality as a call-ready index to continuous image data by a video camera E installed outside the RABS and a video camera F installed inside the RABS. At the same time, another function of the filling apparatus may be to automatically remove a substantially appropriate number of vials with abnormal signals emitting from the RMM monitor, and may be to allow the operator D to get inside like the above falling bottle removal operation to remove abnormal vials. In this case, such an abnormality is similarly recorded in continuous image data as in the operation of opening a door to get inside by an operator, as described above. At the stage where the RMM monitor is back to a normal level, the information upon the operation completion is added as a tag to continuous image data.

After the above sterile vial filling operation is completed, whether the operation(s) has/have any defect or not is confirmed by referring to a manufacturing record report. During a confirmation operation, images added with the index information and captured within time ranges required for confirming the abnormality outbreak time, and times before and after the operation completion time are instantly retrieved from continuous images provided with an index during each operation according to index information, and confirmed with actual images and referred to the manufacturing record. Furthermore, the above retrieved index information and image data are electrically stored together with the above manufacturing record report using falsification-proof software. Accordingly, data integrity (DI) of manufacturing recorded information can assuredly be guaranteed.

As described above, in this invention, the information recording and accumulating device can comprehensively record and accumulate an authentication log of an operator, an operation log of a state of operations, an environment log of a work environment, and opening/closing and connection log of an inward/outward conveying mechanism and a connection mechanism in chronological order, together with videos, for a series of operations in a sterile working device such as an isolator and a RABS. Also, using this advantage, the information recording and accumulating device can promptly and properly confirm the cause of trouble and countermeasures by tracing the series of operations together with recorded videos.

The present invention is achieved not only by each of the above embodiments, but also by the following various alternatives.
(1) In each of the above embodiments, the tag employed is a RFID, but the tag is not restricted thereto, and other types of tags may be used. Note that an operator may be authenticated by biometric authentication like eyes and fingerprints, or QR codes (registered trademark) and bar codes.
(2) In each of the above embodiments, information is communicated between a reader and an information recording and accumulating device by wireless LAN, but such communication is not restricted thereto, and wired information communication may be employed.

### REFERENCE SIGNS LIST

10...Isolator, 11...High-level sterile region (Critical area),
12...Work glove, 13...Sterile connection port (RTP), 14...Air sampler (AS),
15...Particulate counter (PC), 16...Microorganism speedy inspection apparatus (RMM),
17...Pressure sensor (P), 18...Temperature sensor (Temp),
19...Humidity sensor (RH%),
20...Gas concentration detector (Conc), 21...Condensation sensor (SDM),
22...Anemometer (Vel), 23...Biological indicator (BI),
24...Enzyme indicator (EI), 25...First camera, 27...Second camera,
2 6...Operator's tag (RFID), 28, 29, 30, 31, 32...Reader.

## Claims

1. A total logging system for recording and accumulating information regarding the state of a series of operations performed by an operator using a sterile working device, machines and appliances associated with the sterile working device, and appliances, reagents, treatment object articles and other items to be carried to the inside of the sterile working device, the system comprising:
an image capturing device for capturing images of the state of the operations; an information exchanging device for communicating information between a tag and a reader; several types of sensors for monitoring the state of the sterile working device; and an information recording and accumulating device for recording and accumulating information by communicating the information between the image capturing device, the information exchanging device and the sensors, wherein
the image capturing device includes a first camera for capturing images of the inside of the sterile working device,
the information exchanging device includes an operator's tag attached to one or more operators working outside or inside the sterile working device, an apparatus article's tag attached to the appliances, reagents, treatment object articles and other items to be carried to the inside of the sterile working device if needed, and an equipment's reader attached to the machines and appliances associated with the sterile working device and including an antenna for reading information from each of the tags,
the information recording and accumulating device records information for authenticating the operator as an authentication log according to the information received from the information exchanging device, records information for identifying the name of an individual operator and details of operations performed by the operator using the machines, appliances, reagents, the treatment object articles and other items as an operation log, and records information regarding any or no change in the internal environment of the sterile working device as an environment log according to the information received from the sensors, and
the information recording and accumulating device records and accumulates the information of the authentication log, the operation log, and the environment log by allowing each of the information to correspond to a camera video captured by the image capturing device in chronological order and providing a call-ready index for a predetermined part of the camera video.

2. The total logging system according to claim 1, wherein
the image capturing device includes, in addition to the first camera, a second camera for capturing images of the outer periphery of the sterile working device, and
the image capturing device records and accumulates the information of the authentication log, the operation log, and the environment log by also allowing each of the information to correspond to a camera video captured by the second camera in chronological order and providing a call-ready index for a predetermined part of the camera video.

3. The total logging system according to claim 1 or 2, wherein
the sterile working device includes a high-level sterile region for maintaining a high-level sterility in the internal sterile region, and
the sensors include an area sensor for monitoring the high-level sterile region, and the area sensor detects the ingress of the operator or the machines, appliances, reagents, treatment object articles and other items into the high-level sterile region to transmit information to the information recording and accumulating device.

4. The total logging system according to any one of claims 1 to 3, wherein
the sensors include a particulate counter (PC) for continuously monitoring particulates in the high-level sterile region, a real-time microorganism monitor (RMM) for continuously monitoring microorganism particulates, and a pressure sensor (P) for monitoring the pressure in the sterile working device.

5. The total logging system according to claim 1, wherein
the information exchanging device includes a mechanism's reader attached to an inward/outward conveying mechanism such as a door and a pass box disposed in the sterile working device and a connection mechanism with an external device and including an antenna for reading information from each of the tags,
the sensors include several types of environment sensors for monitoring the internal environment of the sterile working device and a mechanism sensor for monitoring the operating state of the inward/outward conveying mechanism and the connection mechanism,
the information recording and accumulating device records information regarding any or no change in the internal environment of the sterile working device as an environment log according to the information received from the environment sensors, and records information for identifying an individual operator and details of the operation of opening/closing and connecting in the inward/outward conveying mechanism and the connection mechanism performed by the operator as an opening/closing and connection log according to the information received from the mechanism sensor, and
the information recording and accumulating device records and accumulates the information of the authentication log, the operation log, the opening/closing and connection log, and the environment log by allowing each of the information to correspond to a camera video captured by the image capturing device in chronological order and providing a call-ready index for a predetermined part of the camera video.

6. The total logging system according to claim 5, wherein
the image capturing device includes, in addition to the first camera, a second camera for capturing images of the outer periphery of the sterile working device, and
the image capturing device records and accumulates the information of the authentication log, the operation log, the opening/closing and connection log, and the environment log by also allowing each of the information to correspond to a camera video captured by the second camera in chronological order and providing a call-ready index for a predetermined part of the camera video.

7. The total logging system according to claim 5 or 6, wherein
the sterile working device is a RABS (restricted access barrier system),
the inward/outward conveying mechanism is an openable/closable door used by the operator to work inside the RABS or carry the appliances, reagents, treatment object articles and other items to the inside of the RABS, and
the door is provided with the mechanism's reader and the mechanism sensor.

8. The total logging system according to any one of claims 1 to 7, wherein
the operator's tag and the apparatus article's tag are a RFID such as a RF tag or an IC tag.
